# EUROPEAN PATENT APPLICATION

(11) **EP 2 128 430 A1**
(43) Date of publication of application: **02.12.2009**
(21) Application number: 08009911.2
(22) Date of filing: 30.05.2008
(51) Int. Cl.: F03B 13/18

(54) **High efficiency wave energy convertor**

(71) Applicant: Bömer, Jeroen Lambertus Maria, 4751 SC Oud Gastel (NL)
(72) Inventor: Bömer, Jeroen Lambertus Maria, 4751 SC Oud Gastel (NL)
(74) Representative: Van Someren, Petronella F. H. M.

(57) **Abstract**

The present invention is related to wave energy convertors (WECs). Such devices are used to convert energy contained in the wave motion of water into useful electrical energy. According to the present invention, a WEC is provided that comprises:
- a buoy;
- a stabilization body for providing a stabilized anchoring platform for said buoy;
- a cable connecting said buoy to said stabilization body, said cable connected to a cable winch to allow for a varying length of cable in between said buoy and said stabilization body;
- energy generating means to generate energy comprising a damping element to exert a damping force on said cable;

wherein said energy generation is based on work done to overcome said damping force.

## Description

The present invention is related to wave energy convertors (WECs). Such devices are used to convert energy contained in the wave motion of water into useful electrical energy.

Most WECs are based on the principle of relative movement between two bodies which is caused by impinging waves. At least one of the two bodies is in or on the water. The impinging waves exert a force on the two bodies causing a change in their mutual position. This force drives a generator, e.g. an electrical generator, which converts the energy delivered by the waves into useful energy. The conversion process can be represented by a damping force. Work done to overcome this damping force corresponds to the useful energy that can be obtained. The impinging waves may exert more force on the two-body system than what is needed to overcome the damping force. This will result in the buildup of kinetic or potential energy, not excluding other forms of energy, but it will not result in the generation of more useful energy as this is related to the damping force only.

The amount of energy that is delivered by the impinging wave to the two-body system is related to the work done to overcome the damping force, i.e. it is related to the damping force itself and a corresponding displacement.

A problem with known devices is related to survivability. To cope with the huge forces exerted by the waves, a rigid arrangement of the two-body system is used in which movement of one body relative to the other body is limited to one or two dimensions only. This limits the efficiency of the system as not all of the available wave power can be converted.

It is therefore an object of the present invention to provide a WEC that demonstrates a higher conversion efficiency than known devices, but which still maintains a high degree of survivability.

According to the present invention, the WEC comprises a buoy connected by a cable to a stabilization body. The stabilization body provides a stabilized anchoring platform for the buoy. The purpose of the buoy is to follow the wave motion whereas the stabilized platform should not be as sensitive to this motion. The platform could for instance be a fixed arrangement placed above the water, or it can be connected to the seabed.

It should be noted that the term cable within the context of the present invention should not be limited to steel cable only. It could for instance also relate to the use of synthetic-rope, anchor chain, leave chain or sprocket chain.

The WEC comprises energy generating means to generate energy, e.g. electrical energy, based on a damping force, exerted by a damping element on the cable.

The cable is connected to a cable winch to allow for a varying length of cable in between the buoy and the stabilization body. The damping element is connected to the cable such that a change in length of the cable, e.g. an increase, is resisted to by means of the damping force. The energy delivered to the system, and hence the energy generated by the energy generating means, is based on the work done to overcome damping force.

The use of a cable enables the construction of a WEC that combines high mechanical strength with a high amount of movement flexibility. This results in a significant improvement in the survivability of the WEC in extreme conditions such as storms, when the WEC has to deal with very large waves.

Preferably, the WEC has a first mode of operation, corresponding to an increasing wave height, and a second mode of operation, corresponding to a decreasing wave height. It is advantageous if the energy generating means generate a significant amount of energy in but one of the first and second modes of operation and if the energy generating means are disengaged from the cable in the other of the first and second modes of operation.

Preferably, the WEC limits movements relative to the water, in order to minimize losses in efficiency due to water resistance. This can be achieved by using the increasing wave height condition as the mode of operation in which energy is extracted from the waves. Using the decreasing wave height condition, would require a large counterweight that inevitably must make significant up and down movements relative through the water with large losses due to water resistance as a result.

Additionally or alternatively, the work done to overcome the damping force relates to the damping force multiplied by a corresponding increased length of cable in between the buoy and the stabilization body. In this case, the buoy moves away from the stabilization body. The damping force exerted by the damping element during this motion, along with the displacement of the cable, determines the energy delivered to the WEC.

An important design parameter of the system is the buoyancy and the weight of the buoy because these factors determine the maximum amount of damping force. If too high a damping force is applied, the impinging wave will not exert enough force to cause a significant change in cable length in between the buoy and the stabilization body. Because there is no displacement of the cable associated with the applied damping force, the power delivered to the system is zero. Alternatively, if the damping force is too low, there will be a significant change in cable length, but the net power will be low as well. To obtain a good efficiency, the damping force should be carefully chosen to match the buoyancy and weight of the buoy as well as the wave behavior.

The buoy and stabilization body can be disposed in a vertical arrangement. The stabilization body could be a fixed arrangement above the water surface, e.g. a tower secured to the seabed extending above the water surface. Preferably, the stabilization body is under water, underneath the buoy. It can be secured to the seabed or it can comprise a large floating body moored to the seabed. In the latter case, the floating body preferably has a slightly negative buoyancy.

Preferably, the WEC comprises at least three cables, arranged such that any movement of said buoy relative to said stabilization body results in a varying length in between the buoy and the stabilization body of at least one of said at least three cables. In this way, energy can be extracted from the wave motion regardless of its direction. An example of such a configuration is one in which both buoy and stabilization body are of rectangular shape and in which the corresponding corners of both bodies are connected by cable. In this configuration, any movement of the buoy will result in a change in cable length in between the buoy and the stabilization body of at least one cable.

Because wave heights can exceed 10 meters or more, it is convenient if the WEC comprises a pulley system for the cable. Such a system is connected to the damping element to provide a mechanical advantage larger than one. For instance, if the mechanical advantage of the system is 2, a wave height of 10 meters would result in a distance of 5 meters over which the damping force has to be overcome.

As mentioned above, the efficiency of the WEC is largely determined by the balance between buoyancy, weight, damping force and wave behavior. Because the latter is irregular, it is convenient if the damping force can be varied accordingly.

The energy generating means preferably comprise an energy transformer to transform mechanical energy delivered to the damping element into hydraulic energy. The hydraulic energy could be stored in a high pressure accumulator. A hydraulic motor connected to an electrical generator, preferably fed by the high pressure accumulator, can then be used to convert the hydraulic energy into electrical energy.

The use of hydraulic energy as an intermediate energy form, instead of direct conversion of wave energy into electrical energy, is advantageous because of the ability of hydraulics to deal with large sudden energy surges, the ability to store large amounts of energy in accumulators, and the ability to protect the system against mechanical overload by pressure relieve valves. Furthermore, hydraulic systems are flexible, easily engineered and components are standardized and readily available at relatively low costs.

In general, the wave motion will result in a linear motion of the cable. The energy transformer could comprise movement translator means to translate this linear movement of the cable into rotational movement. In an embodiment, the cable winch performs this movement translation.

In a preferred embodiment, the energy transformer means comprise a hydraulic pump which has its rotational shaft connected to the winch. A rotational movement of the winch, e.g. during unwinding of the cable, will drive the hydraulic pump. It should be noted at this point that the hydraulic pump, or the energy transformer means, can simultaneously function as the damping element.

Preferably, the hydraulic pump is based on the swash plate principle. The damping force that these pumps exert to the mechanical drive can be adjusted. A one-way clutch can be incorporated in between the hydraulic pump and the winch such that the pump is only driven in one rotational direction only, e.g. during unwinding.

Instead of movement translation, linear movement of the cable can be used directly. For instance, a hydraulic piston pump could be connected to the cable, preferably using a pulley system.

To improve the adjustability of the damping force, a plurality of piston pumps having different diameters can be connected to the cable. Preferably, the piston pumps can be activated individually to allow for adjustment of the damping level.

Preferably, the generated hydraulic energy is related to a pressure difference between a high pressure reservoir and low pressure reservoir. This energy can be generated by the aforementioned pistons or pump. The energy stored in the reservoirs, and in particular in the high pressure reservoir, can be used to drive a hydraulic motor that in turn drives an electrical generator.

To optimize the damping force with respect to the wave behavior, the WEC can comprise a pressure sensor for measuring the wave height with respect to the stabilization body. This sensor can be attached to the buoy or to the stabilization body. If it is connected to the stabilization body, the measured pressure can directly be related to the amount of water above the stabilization body. If the sensor is connected to the buoy the height measurement takes into account the position of the buoy relative to the stabilization body, e.g. by means of the unwound cable length.

In addition to wave height measuring means, the WEC preferably comprises means to determine a prediction for short term wave behavior and controlling means to control the damping force according to this prediction. An example of a prediction involves an extrapolation of the short term wave behavior based on a spectral analysis on previous measurements. This approach is based on the principle that a wave pattern measured for a certain time length can be extrapolated. By controlling the damping force based on this prediction and preferably simultaneously updating the prediction, the efficiency of the WEC can be significantly improved.

It should be noted that the energy generating means preferably are integrated in the buoy. The same may apply for all relevant mechanical parts connected thereto. This provides an apparatus which can easily be replaced. The disadvantage of having critical components comprised in the stabilization body is related to the difficulties that may arise when replacing these components. By having all the critical components inside the buoy, this disadvantage is alleviated.

Further details and advantages of the present invention will be described in detail under reference to the accompanying drawings in which:
Figures 1A, 1B and 1C demonstrate several arrangements for the buoy and the stabilization body.
Figures 2A, 2B and 2C show the situation in which the WEC is under damped, over damped and optimally damped, respectively;
Figure 3 shows a schematic diagram of an embodiment of a WEC based on movement translation from linear to rotational;
Figure 4 shows a schematic diagram of an alternative embodiment of a WEC without movement translation.

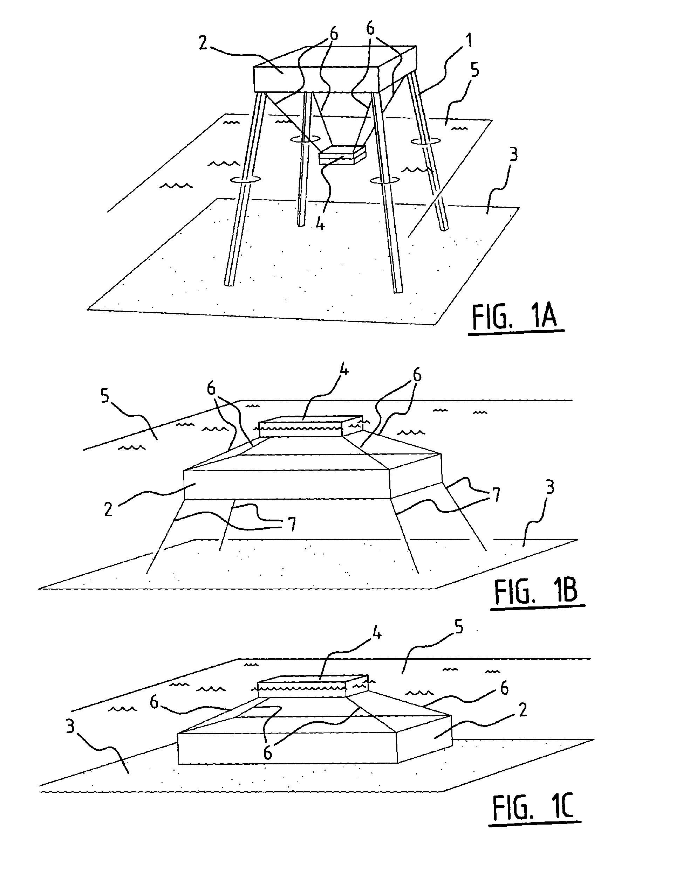

Figure 1A shows a fixed arrangement 1 for the stabilization body 2. The body 2 is anchored to the seabed 3. A buoy 4 is partially submerged in water 5 and is connected to the stabilization body 2 by means of cables 6.

In figure 1B, a different arrangement is shown in which both buoy 4 and stabilization body 2 are in the water 5. Mooring lines 7 are used to connect the stabilization body 2 to the seabed 3. Alternatively, as shown in figure 1C, the stabilization body 2 can be directly connected to the seabed.

In principle, the operation of the abovementioned embodiments is similar. However, assuming that energy is delivered to the WEC during a positive displacement of the cable only, e.g. an increase in cable length in between the buoy and stabilization body, the motion of the buoy in which energy is extracted out of the wave motion is opposite for the embodiments of figure 1A and figures 1B and 1C, respectively.

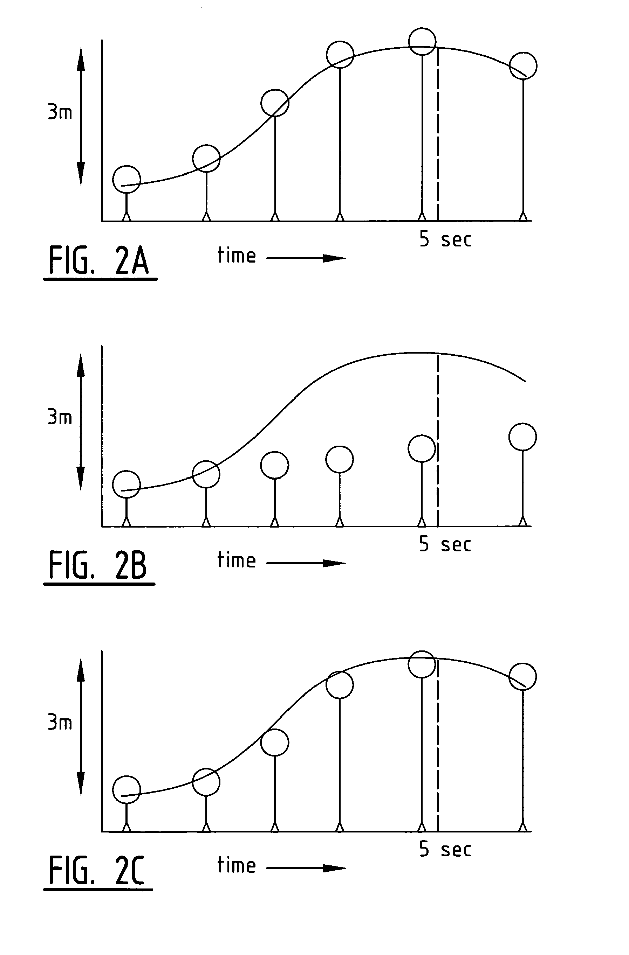

Figures 2A, 2B and 2C demonstrate how to generate useful energy from a floating object, such as a buoy. Each figure represents an ocean wave with a wave height of 3 meters and a wave period of 10 seconds, which corresponds to normal sea conditions. In each figure, the motion of a buoy 4 is drawn, relative to the water surface. For sake of clarity only the vertical component is drawn. In addition, only a single cable is shown. It is assumed that the buoys are attached to the stabilization body 2 with a cable 6 and that the damping which is applied by the damping element to cable 6 can be varied.

In figure 2A, the motion of the buoy 4 is undamped. The buoy 4 will follow the contour of the wave and will rise three meters, but since there is no damping force, the position of buoy 4 relative to the water surface remains unchanged and no work is done, disregarding friction losses etc.

In figure 2B, the motion of the buoy 4 is over damped. The buoy 4 becomes submerged and the damping element exerts a damping force on said cable 6 that is mainly equal to the net submerged buoyancy of the buoy 4.

In this example, the buoy 4 may rise slightly, but because the total distance is marginal, the amount of work done will be lower than optimal.

In figure 2C, the applied damping is optimal. As in figure 2B, the buoy becomes submerged by applying a damping force to the cable. However, in this case the damping force is such that the force exerted by the waves is sufficient to overcome the damping force and such that the buoy 4 is still able to follow the water surface. Because the damping force is now being overcome over the full wave height, the amount of work is maximized.

Assuming a net submerged buoyancy of 10,000N, the amount of work for the situation in figure 2C would equal 10,000 x 3 = 30,000Nm, yielding a theoretical available power of 30,000Nm / 10s = 3,000W.

Assuming a buoy 4 in the shape of a flat cylinder, with a diameter of 10m and a height of 2m, the net submerged buoyancy would be about 150 ton. The available power of a WEC comprising such a buoy 4 would become 450KW, which is a very large potential for such a relatively small device.

It is noted, that these calculations are simplified. Water resistance, buoy dynamic behavior and buoy geometry are not taken into account. Their main purpose is to indicate the basic concept.

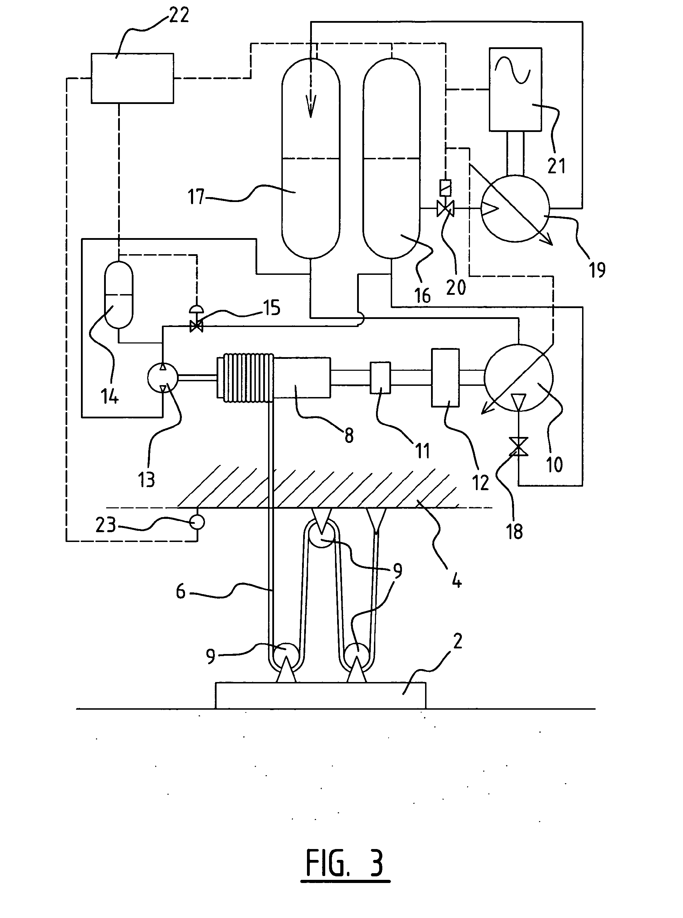

Figure 3 shows a schematic diagram of an embodiment of a WEC according to the present invention.

In figure 3, a buoy 4 is attached to a stabilization body 2 by cable 6. The stabilization body 2 is fixedly connected to the seabed 3 or it can be floating in the water, kept in place by means of mooring lines.

Both ends of cable 6 are attached to the buoy 4, one end fixed against the surface of buoy 4, while the other end is fixed to a cable winch 8. Cable winch 8 is rigidly mounted in a fixed position inside the buoy 4. In this diagram, cable 6 is mounted over three pulleys 9. Two pulleys are attached to the stabilization body 2 and one pulley is attached to the surface of the buoy 4. The pulleys can rotate freely with minimal resistance.

This cable-pulley arrangement has several purposes. Firstly, any motion of the buoy 4 relative to the stabilization body 4 is amplified at one end of the cable 6, in this diagram by a factor of four. Cable winch 8 will therefore rotate over an angle four times greater than without the cable-pulley arrangement. Secondly, the buoyancy force due to motion of the buoy relative to the water surface is distributed over four lengths of cable. Therefore, the required strength of the cable can be reduced by a factor of four. Thirdly, both ends of the cable 6 are attached to the buoy 4, which makes replacement in case of wear or damage easier.

The cable winch 8 stores an amount of cable 6 that will cover most practical movements of the buoy 4 under most sea conditions. This can easily be accomplished by simply making the cable winch 8 large enough and by making sure that the cable 6 is long enough for most practical conditions.

One end of the shaft of the cable winch 8 is connected to a variable hydraulic pump 10. The mechanical connection includes a one-way clutch device 11 and a drive system 12. The one-way clutch 11 allows rotation of the pump 10 only during the condition that the cable 6 is unwinding from the cable winch 8. The one-way clutch 11 can for instance be a sprag clutch. The drive system 12 may include gears, belts or chains, but could also be just a simple coupling.

The other end of the shaft of the cable winch 8 is connected to the hydraulic torque motor 13. This can be a rigid mechanical connection only, that allows the torque motor 13 to rotate in both directions. The torque motor 13 is for instance a geroler motor-pump, which can operate as a motor and as a pump, depending on the direction of rotation.

The function of the torque motor 13 is to rewind the cable 6 onto the cable winch 8 whenever the torque which it develops exceeds the torque that is developed by the cable 6 pulling on the cable winch 8.

If the torque that is developed by the cable 6 pulling on the cable winch 8 becomes larger than the torque that the motor 13 develops, the torque motor 13 starts to rotate in reverse direction, thereby acting as a pump. The hydraulic energy in this condition is stored in the auxiliary hydraulic accumulator 14, so that the generated energy is not lost.

However, due to inevitable losses, the pressure in auxiliary accumulator 14 will eventually drop below a certain threshold value and a regulator valve 15 will allow hydraulic fluid, coming from a high pressure accumulator 16 to enter into the auxiliary hydraulic accumulator 14.

The variable hydraulic pump 10 suction inlet is connected to a low pressure reservoir 17. The pump 10 discharge outlet is connected to the high pressure accumulator 16. The one-way valve 18 avoids that the pump 10 runs backwards when the pump 10 is stationary.

Pump 10 can be for instance of the axial multiple piston type with a variable swash plate. The pressure inside the low pressure reservoir 17 must be kept above a certain threshold value in order to avoid that the pump 10 cavitates under full load.

The inlet of a variable hydraulic motor 19 is connected to the high pressure accumulator 16 through an open/close valve 20. The outlet of motor 19 is connected to the low pressure reservoir 17. The motor 19 drives a generator 21. The motor 19 can for instance be of the axial multiple piston type with a variable swash plate.

The capacity of the high pressure accumulator 16 is preferably large enough to enable the motor 19 to run the generator 21 at a constant speed, synchronized with the network. The generated power depends on the availability of hydraulic energy stored in the high pressure accumulator 16, which is constantly consumed by the motor 19 and intermittently supplied by the pump 10, depending on sea conditions.

A programmable control unit 22 receives information about the position of the buoy 4 relative to the water surface from a depth sensor 23. In addition, information about pressure and level in the hydraulic accumulators 14, 16 and 17 is received by the control unit 22. The control unit 22 is capable of opening and closing valve 20, adjusting the capacity levers of motor 19 and pump 10. The control unit 22 can also adjust the minimum cable tension by increasing or decreasing the pressure in the auxiliary accumulator 14, by operating the regulator valve 15. Dotted lines are used to indicate the communication lines from and to control unit 22.

It is assumed that the same situation is present as presented in figure 2C, starting at time 0 sec. The wave action represented in figure 2C is continued both in the past and the future.

At t=0, the buoy 4 is in a low position with the cable 6 tensioned by the torque motor 13. For a brief moment the torque motor 13 is stationary but applies torque that will pull the buoy 4 slightly below its free floating position. If the water level relative to the buoy starts to rise, the tension in the cable 6 increases.

When, due to increased cable tension, the torque at the cable winch 8 exceeds the torque applied by the torque motor 13, the one-way clutch 11 will become engaged. Consequently, torque will be applied to pump 10 through the drive system 12.

It is noted, that drive system 12 may increase the speed of pump 10, but for now it is assumed that it is a simple mechanical coupling.

Since the control unit 22 is programmed with a "smart" control algorithm, the capacity lever of pump 10 is set at a position that anticipates coming waves. This means that the pump 10 will only start to rotate when the torque exceeds a minimum value that depends on the actual position of the capacity lever and the pressure difference between suction and discharge. During a short period, the pump 10 will not rotate and therefore the cable 6 will not unwind and the buoy 4 will become increasingly lowered relative to the water surface. When the applied torque exceeds the minimum value, the pump 10 starts to rotate and starts to store hydraulic energy into the high pressure accumulator 16.

From the moment that pump 10 starts, the control unit 22 operates the capacity lever of the pump 10 in order to apply optimal damping, according to figure 2C. In this way, the maximum amount of hydraulic energy will be stored into the high pressure accumulator 16. The control unit 22 can do so because it receives constant information about the position of the buoy 4 relative to the water surface from the pressure sensor 23.

By using spectral analysis on previous measurements of the wave height, or the distance between the buoy 4 and the stabilization body 2, a prediction can be made for the near future. Spectral analyses for this purpose are well known to those in the art and comprise Fast Fourier Transform (FFT) techniques. The prediction for the wave behavior can then be used to adjust the damping accordingly. Preferably, the prediction is updated continuously.

After about 5 seconds, the buoy 4 starts to break the surface of the water and cable tension will drop quickly, which makes the pump 10 to stop rotating.

During the time that the pump 10 rotates, the torque motor 13 is running in reverse direction causing it to operate as a pump. In this condition, the torque motor 13 will store hydraulic energy into the auxiliary accumulator 14.

At about 6 seconds, the buoy 4 will arrive to a maximum position relative to the water surface. The torque at the cable winch 8 due to cable tension, will drop below the torque applied by the torque motor 13 causing the one-way clutch 11 to disengage. The cable 6 will rewind and is kept under constant tension. While the cable rewinds, pump 10 will be stationary due to the one-way valve 18 closing.

At about 10 seconds, the cycle repeats itself. Most of the hydraulic energy that is required for the torque motor 13 to rewind the cable and to keep it tensioned, comes from the accumulated energy from the torque motor itself. Due to inevitable losses, regulator valve 15 will supply a small amount of hydraulic energy coming from the high pressure accumulator 16 into the auxiliary accumulator 14.

During the 10 seconds cycle, in which wave energy is converted into hydraulic energy, the generator 21 is running, driven by the hydraulic motor 19. Valve 20 is then in the open position thereof.

The capacity lever for the motor 19 is operated by the control unit 22. The control target is to keep the hydraulic energy, which is stored into the high pressure accumulator 16, at a required level.

If, due to increased wave action, the amount of hydraulic energy that is stored increases, the capacity of the motor 19 can increase and vice versa.

In the condition of very low available wave energy (calm seas), the control unit 22 can shut down the generator 21 by closing valve 20 and the system will wait for better conditions. In the condition of very high available wave energy, exceeding the capacity of the system, the control unit 22 can reduce the capacity of pump 10 (reducing damping). In this case, the control strategy is to keep the generator 21 and motor 19 running at maximum power, while the capacity of pump 10 is adjusted to keep the high pressure accumulator 16 at the required level.

During severe weather conditions, the survivability of the system can be guaranteed by the control unit's ability to apply overdamping while still allowing the bouy to make large movements. In this way the systems motions will not exceed mechanical limits, while inertia forces coming from large waves become distributed.

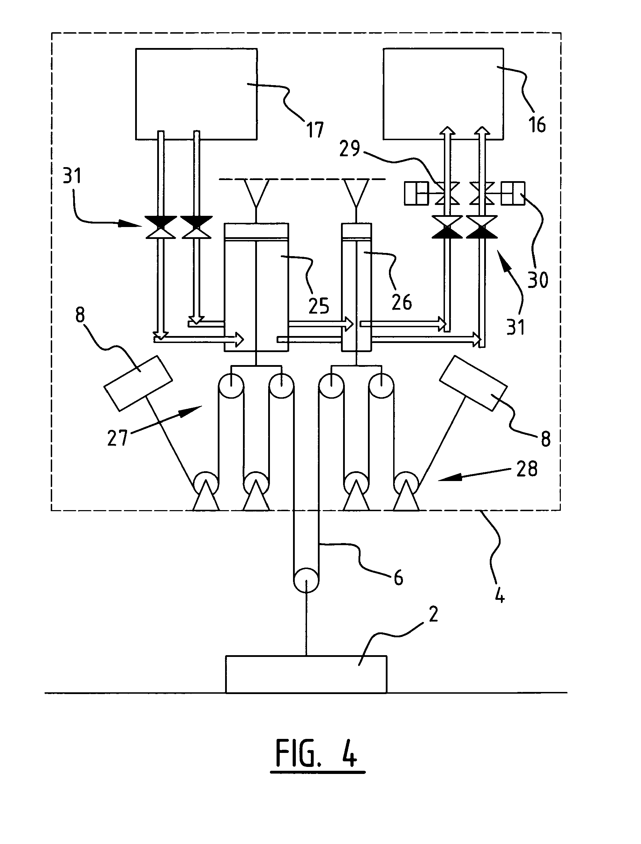

Figure 4 presents a schematic diagram of an alternative embodiment of a WEC according to the present invention. The generator part of the WEC is similar to figure 3 and is therefore not shown in this figure. In this embodiment the linear motion of the cable 6 is not converted into a rotational movement. Instead the cable 6 is connected to a hydraulic piston pump, or to a series of piston pumps (two pumps 25, 26 are shown in figure 4).

The two piston pumps 25, 26 in figure 4 have different diameters, piston pump 25 being the larger of the two. Both pumps 25, 26 are connected to a low pressure reservoir 17 and high pressure accumulator 16. A cable-pulley system provides a mechanical advantage such that the increase in distance between the buoy 4 and the stabilization body 2 results in a smaller displacement of the arm of piston pump 25, 26, if activated. On both sides of the cable-pulley system, which comprises pulleys 27 connected to the pistons and pulleys 28 connected to the surface of the buoy, the cable is mounted on cable winches 8. These cable winches 8 can wind and unwind the cable 6.

Two control valves 29, 30 are provided to enable/disable fluid transport to the high pressure accumulator for pumps 25, 26, respectively. In addition, for each piston pump, check valves 31 are arranged enabling hydraulic fluid transport from the low pressure reservoir to the piston pumps and from the piston pumps to the high pressure accumulator.

During operation, damping can be adjusted by controlling valves 29 and 30. Closing of both valves will provide the maximum amount of damping and will essentially lock the cable, thereby not producing useful power. It should be noted that, unlike in the embodiment shown in figure 3, the length of cable is normally not varied during steady sea conditions. The difference in cable length in between the buoy 4 and the stabilization body 2 is completely absorbed by the arms of the piston pumps 25, 26. This further illustrates the added value of the cable-pulley system, as without such a system, the dynamic range in wave height would be severely limited. The length of the cable can be adjusted to accommodate for tidal differences to ensure the optimal cable length for a given wave height pattern.

If one of the valves 29, 30 is closed, the corresponding pulley 27 will not move downwards unlike the pulley corresponding to the other piston pump. The damping force is then solely determined by that single piston pump. The pump 25 corresponding to the larger diameter will exert a larger damping force than the pump 26 with the smaller diameter.

By using multiple piston pumps 25, 26 with different diameters, damping can be adjusted to the wave behavior by the control unit 22 (not shown), similar to the embodiment shown in figure 3. However, unlike the embodiment in figure 3, the damping force can only follow discrete steps. The advantage of this embodiment is that costs can be reduced because relatively low cost components can be used.

Preferably, multiple of such piston arrangements are distributed over the buoy. By controlling the damping force exerted by each individual piston, the combined damping force of the buoy as a whole can be optimized.

It should be obvious to those skilled in the art, that various modifications, adjustments or changes to the embodiments of the invention can be implemented without deviation from the scope of the invention that is defined by the accompanying claims.

## Claims

1. Wave energy converter (WEC) comprising:
- a buoy;
- a stabilization body for providing a stabilized anchoring platform for said buoy;
- a cable connecting said buoy to said stabilization body, said cable connected to a cable winch to allow for a varying length of cable in between said buoy and said stabilization body;
- energy generating means to generate energy comprising a damping element to exert a damping force on said cable;
wherein said energy generation is based on work done to overcome said damping force.

2. WEC according to claim 1, having a first mode of operation, corresponding to an increasing wave height, and a second mode of operation, corresponding to a decreasing wave height, wherein said energy generating means generate a significant amount of energy in but one of said first and second modes of operation, and wherein said energy generating means are disengaged from said cable in the other of said first and second modes of operation.

3. WEC according to any of the claims 1-2, wherein said stabilization body is submerged in water below said buoy.

4. WEC according to any of the claims 1-3, wherein said buoy comprises at least three cables, arranged such that any movement of said buoy relative to said stabilization body results in a varying length of at least one of said at least three cables.

5. WEC according to any of the claims 1-4, comprising a pulley system for said cable, said pulley system connected to said damping element to provide a mechanical advantage larger than one.

6. WEC according to any of the claims 1-5, wherein said damping force is adjustable.

7. WEC according to any of the claims 1-6, wherein said energy generating means comprise:
- an energy transformer to transform mechanical energy delivered to said damping element into hydraulic energy;
- a hydraulic motor connected to an electrical generator, said motor-generator assembly arranged to convert hydraulic energy into electrical energy.

8. WEC according to claim 7, wherein said energy transformer comprises movement translator means to translate linear movement of said cable into rotational movement.

9. WEC according to claim 8, wherein said energy transformer comprises a hydraulic pump having its rotational shaft connected to said winch.

10. WEC according to claim 7, wherein said energy transformer comprises a hydraulic piston pump connected to a said cable.

11. WEC according to claim 10, comprising a plurality of hydraulic pistons pumps having different diameters connected to said cable.

12. WEC according to claim 11, wherein said hydraulic piston pumps can be individually activated.

13. WEC according to any of the claims 1-12, wherein said hydraulic energy is related to a pressure difference between a high pressure accumulator and low pressure reservoir.

14. WEC according to any of the claims 1-13, comprising:
- comprising a pressure sensor for measuring wave height;
- processing means to determine a prediction for short term wave behavior;
- controlling means to control said damping force according to said prediction.

15. WEC according to any of the claims 1-14, wherein said prediction is an extrapolation of said short term wave behavior based on a spectral analysis on previous measurements.
